Europäisches Patentamt

European Patent Office

Office européen des brevets

(19)

(11) Veröffentlichungsnummer: **0 299 214**
A1

## (12) EUROPÄISCHE PATENTANMELDUNG

(21) Anmeldenummer: 88109459.3

(22) Anmeldetag: 14.06.88

(51) Int. Cl.4: **A01L 7/02**

(30) Priorität: 11.07.87 DE 3723056

(43) Veröffentlichungstag der Anmeldung:
18.01.89 Patentblatt 89/03

(84) Benannte Vertragsstaaten:
AT CH DE FR LI SE

(71) Anmelder: **WALTER LEITNER GMBH**
**Schaffhauser Strasse 29**
**D-7880 Bad Säckingen(DE)**

(72) Erfinder: **Leitner, Walter**
**Sanarystrasse 18**
**D-7880 Bad Säckingen(DE)**

(74) Vertreter: **Patentanwälte Dipl.-Ing. Hans**
**Schmitt Dipl.-Ing. Wolfgang Maucher**
**Dreikönigstrasse 13**
**D-7800 Freiburg i.Br.(DE)**

(54) Hufeinlage.

(57) Eine Hufeinlage (1) zur Verhinderung von Schneeklumpen innerhalb einer Hufausnehmung (2) weist ein innerhalb des Hufeisens (3) umlaufendes Einlagestück (4) auf, welches eine Leder- oder Kunstlederschnur mit Vollquerschnitt ist und mittels Metallplättchen (5) und (6) und Halteösen (7) justierbar befestigt werden kann. Somit ist das Einlagestück (4) unempfindlich gegen Kälte und Fett und eine Nachbefestigung oder ein Nachnageln ist vermieden, weil die Metallplättchen nicht nachgiebig sind.

Fig. 2

EP 0 299 214 A1

## Hufeinlage

Die Erfindung betrifft eine Hufeinlage zur Verhinderung eines Festsetzens von Schneeklumpen unterhalb oder innerhalb der Hufausnehmung, mit einem etwa parallel zum Hufeisen innerhalb von dessen Ausnehmung verlaufenden biegsamen Einlagestück, welches mittels lappenartiger Befestigungselemente an dem Hufeisen und/oder den Befestigungsnägeln des Hufeisens fixiert ist.

Eine derartige Einlage aus Gummi oder gummielastischem Werkstoff ist bereits beispielsweise aus der DE-OS 24 02 321 bekannt. Dabei liegt diese Einlage unmittelbar an dem Hufeisen an, so daß die Gefahr besteht, daß in der von der Einlage selbst umschlossenen Ausnehmung doch ein Schneeklumpen entstehen und hängenbleiben kann. Darüberhinaus ist Gummi oder gummiartiger Werkstoff deshalb als ungünstig anzusehen, weil die Hufausnehmungen eines Pferdes zu ihrer Pflege gefettet werden sollen und Fett bekanntermaßen Gummi angreift und somit die Lebensdauer dieser Hufeinlage erheblich vermindert. Darüberhinaus leidet die Lebensdauer solcher Hufeinlagen aus Gummi auch durch die Kälte, der sie aufgrund ihres Einsatzzweckes ausgesetzt werden. Darüberhinaus sind solche sehr nachgiebigen Einlagen empfindlich gegen Steine oder sonstige Bodenunebenheiten.

Ein weiterer Nachteil bekannter Lösungen besteht darin, daß die lappenartigen Befestigungselemente einstückig mit dem Einlagestück verbunden sind und deshalb durch den weichen Werkstoff ein mehrfaches Nach-Nageln der Hufeisen erforderlich wird. Auch können solche Gummilappen bei einer Belastung des Einlagestückes durch Steine od. dgl. eingerissen oder abgerissen werden. Dies geschieht um so leichter, wenn der Gummi durch Fett oder durch die Kälte brüchig geworden ist.

Es besteht deshalb die Aufgabe, eine Hufeinlage der eingangs erwähnten Art zu schaffen, die schon bei dem ersten Winterbeschlag eines Pferdes so gut befestigt werden kann, daß Nachbefestigungen entfallen können. Vor allem soll die Hufeinlage eine verbesserte Lebensdauer sowohl bei der Berührung mit Fett als auch bei Kälte haben und gegen mechanische Beschädigungen möglichst unempfindlich sein.

Die Lösung dieser scheinbar widersprüchlichen Aufgabe besteht darin, daß das Einlagestück eine Leder- oder Kunstlederschnur mit Vollquerschnitt ist und daß die Befestigungselemente Plättchen sind, die mittels Halteösen od. dgl. mit Abstand zueinander an dem Einlagestück befestigt sind. Eine Leder- oder Kunstlederschnur ist zwar biegsam und flexibel, hat aber eine hohe Festigkeit und wird weder bei Berührung mit Fett noch unter Kälteeinwirkung brüchig, sondern behält ihre Geschmeidigkeit, so daß auch Druckbelastungen durch Steine od. dgl. dieses Einlagestück nicht beschädigen können. Darüberhinaus ergibt sich durch die Befestigungselemente und die Fixierung mittels Ösen auch eine hohe Sicherheit der Befestigung selbst. Ferner ist ein ganz großer Vorteil dieser Befestigungselemente und Halteösen, daß das Einlagestück an praktisch jede Hufgröße sehr einfach angepaßt werden kann, indem es auf die entsprechende Länge zurechtgeschnitten und die Ösen entsprechend verschoben werden können. Die als Befestigungselemente dienenden Metallplättchen bilden dabei gleichzeitig Abstandhalter, durch welche das Einlagestück etwas Abstand zu dem Huf bekommt, so daß es in den in die Hufausnehmung eindringenden Schnee in jedem Falle eine Rille eindrückt, an welcher das entsprechende Schneestück sofort abbricht, so daß es leicht wieder aus dem Huf herausfällt.

Für die Lebensdauer ist es besonders zweckmäßig, wenn die Plättchen und die Halteösen aus korrosionsfestem Werkstoff, vorzugsweise aus korrosionsfestem Metall bestehen. Dabei können die Befestigungsösen Metallringe sein, die an einer Seite offen sind und sich mit ihrem freien Ende überlappen und zur Lagefixierung zusammenklemmbar sind, wobei der Querschnitt des Einlageteiles vorzugsweise etwa kreisförmig ist. Solange die Befestigungsösen noch nicht festgeklemmt sind, ist die vorstehend schon erwähnte Justierung durch seitliche Verschiebungen sehr leicht möglich. Das Festklemmen kann mit Hilfe einer entsprechenden Ösen-Zange sehr leicht bewerkstelligt werden und ist eine wirkungsvolle und dennoch sehr einfache Art der Befestigung. Dabei kommt es einer solchen Zusammenklemmung eines an einer Seite überlappenden Metallringes entgegen, wenn das Einlageteil einen kreisförmigen Querschnitt hat, weil dann die Klemmkräfte entsprechend gut über den Umfang dieses Querschnittes verteilt werden können.

Für eine ausreichend sichere Befestigung und gute Kraftübertragung von dem Einlagestück zu seiner Befestigung ist es vorteilhaft, wenn im etwa vorderen mittleren Bereich des Einlagestückes, welcher Bereich sich in Gebrauchsstellung an der Innenseite des vorderen Bereiches des Hufeisens befindet, wenigstens zwei Metallplättchen angeordnet sind, die an ihren dem Einlagestück abgewandten Enden Lochungen für den Durchtritt der Befestigungsnägel des Hufeisens zwischen Huf und Hufeisen haben. Diese Metallplättchen können also beim Beschlagen des Pferdes zwischen dessen Huf und dem Hufeisen eingesetzt und mit dem Hufnagel gleich fixiert werden. Dabei kann das Einlagestück bereits in die Halteöse eingehängt sein oder auch nachträglich eingezogen werden.

Im Bereich der beiden Enden des Hufeisens und den diesen entsprechenden Endbereichen des Einlagestückes können vergrößerte Halteplatten als Befestigungselemente vorgesehen sein, die eine Abkröpfung oder Abbiegung haben und auf die dem Huf abgewandte Unterseite des Hufeisens - also die beim Benutzen mit dem Untergrund in Berührung kommende Seite des Hufeisens - greifen und mittels einer Lochung od. dgl. und eines Befestigungselementes, insbesondere einer stollenartigen Schraube des Winterbeschlages an dem Hufeisen festlegbar sind. Die in aller Regel für einen Winterbeschlag einsetzbaren Stollen erhalten so eine zusätzliche Funktion, indem sie die im Endbereich des Einlagestückes befindlichen Befestigungselemente festlegen können, wobei in diesem Bereich die Befestigungselemente nicht zwischen Hufeisen und Huf, sondern in beschriebener Weise an der Unterseite des Hufes liegen können. Eine solche Ausnutzung des Winterbeschlages ist bei den herkömmlichen Hufeinlagen nicht möglich gewesen.

Es sei noch erwähnt, daß der Durchmesser des etwa kreisförmigen Querschnittes des Einlagestückes etwa einen halben Zentimeter bis etwa einen Zentimeter, vorzugsweise etwa drei Viertel Zentimeter betragen kann. Der Abstand des Einlagestückes von der Innenseite des Hufeisens kann etwa der Stärke oder Dicke des Einlagestückes entsprechen.

Insgesamt ergibt sich eine Hufeinlage, die aufgrund der vorgesehenen Konstruktion und der besonderen Materialien eine hohe Lebensdauer hat, eine gute und sichere Befestigung über lange Zeit ermöglicht und dennoch preiswert ist, weil z. B. derartige Lederschnüre im Handel sind und die entsprechenden Einlagestücke einfach davon abgeschnitten werden können. Aufwendige Formen zum Herstellen von Gummieinlagen und entsprechende Herstellungsverfahren werden vermieden.

Nachstehend ist die Erfindung mit ihren ihr als wesentlich zugehörenden Einzelheiten anhand der Zeichnung noch näher beschrieben. Es zeigt in schematisierter Darstellung:

Fig. 1 die Draufsicht der Unterseite eines Hufes mit Hufeisen und daran befestigter Einlage und

Fig. 2 einen Querschnitt durch den Huf, das Hufeisen und die Hufeinlage.

Eine im ganzen mit 1 bezeichnete Hufeinlage dient in an sich bekannter Weise zum Verhindern des Festsetzens von Schneeklumpen unterhalb oder innerhalb der Hufausnehmung 2. Zu dieser Hufeinlage 1 gehört vor allem ein mit Abstand etwa parallel zum Hufeisen 3 umlaufendes biegsames Einlagestück 4, welches in noch zu beschreibender Weise fixiert ist.

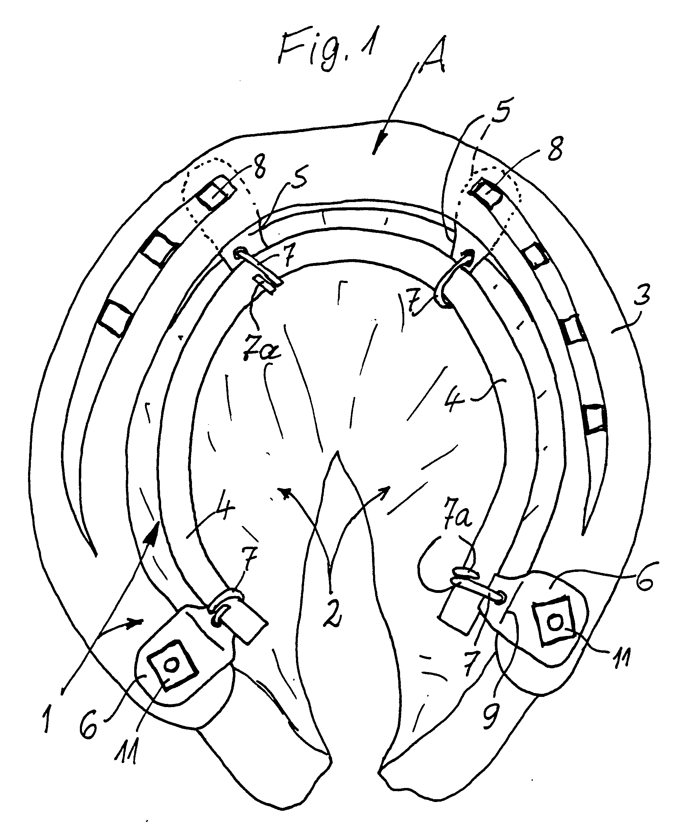

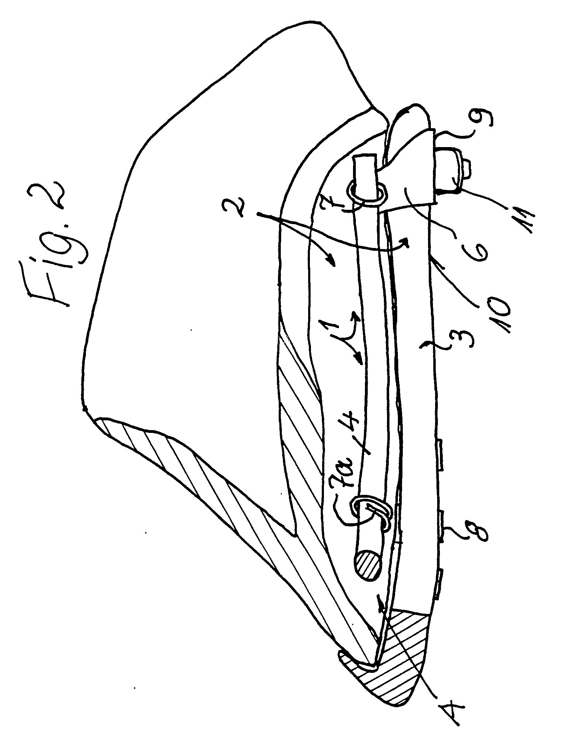

Das Einlagestück 4 ist eine Leder- oder Kunstlederschnur, die gemäß Fig. 2 einen Vollquerschnitt hat. Die Befestigungselemente sind Metallplättchen 5 und 6, die mittels Halteösen 7 od. dgl. mit Abstand zueinander an dem Einlagestück 4 befestigt sind, wie es besonders gut in Fig. 1 erkennbar ist. Dabei können diese Metallplättchen 5 und 6 und die Ösen 7 bevorzugt aus korrosionsfestem Werkstoff, insbesondere aus korrosionsfestem Stahl bestehen, um der Nässe von Schmelzwasser gut widerstehen zu können.

Die Befestigungsösen 7 sind im Ausführungsbeispiel Metallringe, die an einer Seite offen sind und sich mit ihren freien Enden 7 a in der in den Zeichnungen erkennbaren Weise seitlich überlappen, so daß sie zu ihrer Lagefixierung an dem Einlagestück 4 zusammenklemmbar sind. Der Querschnitt des Einlagestückes 4 ist dabei im Ausführungsbeispiel etwa kreisförmig.

Bevor die Ösen 7 zusammengeklemmt sind, kann also das Einlagestück 4 noch relativ zu ihnen verschoben, also relativ zu dem Hufeisen 3 justiert werden. Da das Einlagestück 4 eine Lederschnur ist, kann sie auch in ihrer Länge entsprechend zugeschnitten werden, so daß eine sehr einfache Anpassung an unterschiedlich große Hufe möglich ist.

Im etwa vorderen mittleren Bereich A des Einlagestückes 4, welcher Bereich sich in Gebrauchsstellung an der Innenseite des vorderen Bereiches des Hufeisens 3 befindet, sind im Ausführungsbeispiel zwei Metallplättchen 5 als Befestigungselemente angeordnet, die an ihren dem Einlagestück 4 abgewandten, in der Zeichnung durch das Hufeisen 3 verdeckten Ende Lochungen für den Durchtritt der Befestigungsnägel 8 des Hufeisens 3 zwischen Huf und Hufeisen haben. Sie werden also beim Beschlagen des Pferdes gleichzeitig fixiert.

Im Bereich der beiden Enden des Hufeisens 3 und den diesen entsprechenden Endbereichen des Einlagestückes 4 sind vergrößerte Halteplatten 6 vorgesehen, die eine Abkröpfung oder Abbiegung 9 haben und auf die dem Huf abgewandte Unterseite 10 des Hufeisens 3 greifen, wo sie mittels einer Lochung od. dgl. und eines Befestigungselementes, im Ausführungsbeispiel einer stollenartigen Schraube 11 des Winterbeschlages an dem Hufeisen 3 festgelegt sind. Diese Stollen 11 des Winterbeschlages erhalten so eine zusätzliche Funktion, wobei vorteilhaft ist, daß diese Hufeinlage 1, die im Winter benötigt wird, mit Teilen des Winterbeschlages festgelegt werden kann.

In Fig. 1 erkennt man noch, daß der Abstand des Einlagestückes 4 von der Innenseite des Hufeisens 3 etwa der Stärke oder Dicke des Einlagestückes 4 entspricht. Gemäß Fig. 2 kann dabei dieses Einlagestück sogar etwas höher als die Oberseite des Hufeisens 3 angeordnet sein. Auch dies läßt sich über die Ösen 7 beliebig einregulieren und vorwählen. Falls erforderlich, könnte also das Einlagestück 4 auch tiefer angeordnet werden oder sogar eine Ebene aufspannen, die schräg zu der von dem Hufeisen umschlossenen Ebene steht. Dies ist ein ganz erheblicher Vorteil der Halteösen 7 gegenüber einer einstückigen Herstellung des Einlagestückes 4 mit Befestigungslappen.

Alle in der Beschreibung, den Ansprüchen, der Zeichnung und der Zusammenfassung enthaltenen Merkmale und Konstruktionsdetails können sowohl einzeln als auch in beliebiger Kombination miteinander wesentliche Bedeutung haben.

**Ansprüche**

1. Hufeinlage (1) zur Verhinderung eines Festsetzens von Schneeklumpen unterhalb oder innerhalb der Hufausnehmung (2), mit einem etwa parallel zum Hufeisen (3) innerhalb von dessen Ausnehmung umlaufenden biegsamen Einlagestück (4), welches mittels lappenartiger Befestigungselemente an dem Hufeisen und/oder den Befestigungsnägeln des Hufeisens fixiert ist, **dadurch gekennzeichnet,** daß das Einlagestück (4) eine Leder- oder Kunstlederschnur mit Vollquerschnitt ist und daß die Befestigungselemente Plättchen (5, 6) sind, die mittels Halteösen (7) od. dgl. mit Abstand zueinander an dem Einlagestück (4) befestigt sind.

2. Hufeinlage nach Anspruch 1, dadurch gekennzeichnet, daß die Plättchen (5, 6) und die Ösen (7) aus korrosionsfestem Werkstoff, vorzugsweise aus korrosionsfestem Metall, insbesondere Stahl bestehen.

3. Hufeinlage nach Anspruch 1 oder 2, dadurch gekennzeichnet, daß die Befestigungsösen (7) Metallringe sind, die an einer Seite offen sind und sich mit ihren freien Enden überlappen und zur Lagefixierung zusammenklemmbar sind und daß der Querschnitt des Einlageteiles (4) vorzugsweise etwa kreisförmig ist.

4. Hufeinlage nach einem der Ansprüche 1 bis 3, dadurch gekennzeichnet, daß im etwa vorderen mittleren Bereich (A) des Einlagestückes (4), welcher Bereich sich in Gebrauchsstellung an der Innenseite des vorderen Bereiches des Hufeisens (3) befindet, wenigstens zwei Metallplättchen (5) angeordnet sind, die an ihren dem Einlagestück (4) abgewandten Enden Lochungen für den Durchtritt der Befestigungsnägel (8) des Hufeisens (3) zwischen Huf und Hufeisen haben.

5. Hufeinlage nach einem der Ansprüche 1 bis 4, dadurch gekennzeichnet, daß im Bereich der beiden Enden des Hufeisens (3) und den diesen entsprechenden Endbereichen des Einlagestückes (4) vergrößerte Halteplatten (6) vorgesehen sind, die eine Abkröpfung (9) haben und auf die dem Huf abgewandte Unterseite (10) des Hufeisens (3) greifen und mittels einer Lochung od. dgl. und eines Befestigungselementes, insbesondere einer stollenartigen Schraube (11) des Winterbeschlages an dem Hufeisen (3) festlegbar sind.

6. Hufeinlage nach einem der Ansprüche 1 bis 5, dadurch gekennzeichnet, daß der Durchmesser des etwa kreisförmigen Querschnittes des Einlagestückes etwa 1/2 cm bis etwa 1 cm, vorzugsweise etwa 3/4 cm beträgt.

7. Hufeinlage nach einem der Ansprüch 1 bis 6, dadurch gekennzeichnet, daß der Abstand des Einlagestückes (4) von der Innenseite des Hufeisens (3) etwa der Stärke des Einlagestückes (4) entspricht.

Fig. 1

Fig. 2

EP 0 299 214 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | DE-A-2 402 321 (CATTANEO)<br>* Figuren 8,10; Seite 4, Zeilen 1,2; Anspruch 7 *<br>--- | 1 | A 01 L 7/02 |
| Y | DE-C- 707 239 (BACH)<br>* Figuren 1,2,8,9; Seite 2, Zeilen 35-41 * | 1 | |
| A | | 5 | |
| A | ---<br>FR-A- 444 618 (MARCUS)<br>* Figuren 3,4; Seite 1, Zeilen 62-63 *<br>----- | 1 | |

RECHERCHIERTE
SACHGEBIETE (Int. Cl.4)

A 01 L

Der vorliegende Recherchenbericht wurde für alle Patentansprüche erstellt

| Recherchenort | Abschlußdatum der Recherche | Prüfer |
|---|---|---|
| DEN HAAG | 11-10-1988 | VILBIG K |

EPO FORM 1503 03.82 (P0403)